# EUROPEAN PATENT SPECIFICATION

(11) **EP 4 502 582 B1**
(45) Date of publication and mention of the grant of the patent: **08.07.2026**
(21) Application number: 24190850.8
(22) Date of filing: 25.07.2024
(51) Int. Cl.: G01N 25/18

(54) **THERMAL CONDUCTIVITY SENSOR COMPRISING A CAP LAYER**
WÄRMELEITFÄHIGKEITSSENSOR MIT EINER DECKSCHICHT
CAPTEUR DE CONDUCTIVITÉ THERMIQUE COMPRENANT UNE COUCHE DE RECOUVREMENT

(30) Priority: 31.07.2023 US 202318362701; 31.07.2023 LU 504837
(43) Date of publication of application: 05.02.2025
(73) Proprietor: FLUSSO LIMITED, Cambridge, Cambridgeshire CB3 0QH (GB)
(72) Inventor: UDREA, Florin, Cambridge, CB3 0QH (GB); ALI, Syed Zeeshan, Cambridge, CB3 0QH (GB); GARDNER, Ethan Lance, Cambridge, CB3 0QH (GB); CHIODARELLI, Nicolò, Cambridge, CB3 0QH (GB); LEE, Cerdin, Cambridge, CB3 0QH (GB); SUBIN, Mihhail, Cambridge, CB3 0QH (GB)
(74) Representative: Marks & Clerk LLP

(56) References cited:
- WO-A2-2022/268892
- US-A1- 2022 404 300
- US-B2- 11 022 576

## Description

### TECHNICAL FIELD

The present disclosure relates to a thermal conductivity sensor for measuring a concentration of a gas, and methods of manufacturing a thermal conductivity sensor.

### BACKGROUND

Thermal conductivity sensors can be used to measure a concentration of a gas. For example, a change in gas concentration may be detected as a change in resistance of a heater provided in the sensor.

The sensitivity of a sensor may vary depending on the thermal conductivity of the target gas and the difference in thermal conductivity between the target gas and a reference gas (for example air). The sensitivity of a sensor may also depend on the efficiency of the heat transfer from the heater through the target gas. In cases where, for example, the thermal conductivity of the target gas is quite close in value to the thermal conductivity of a reference gas, the efficiency of the heat transfer from the heater through the target gas needs to be increased to ensure satisfactory sensitivity of the sensor.

An example of a thermal fluid sensor is described in US 2022/404300 A1.

### SUMMARY

Described herein is a thermal conductivity sensor for measuring a concentration of a gas.

The invention is defined by the independent claims. Further aspects of the invention are outlined in the dependent claims.

As the person skilled in the art will understand, "micro-machining" may comprise the fabrication of micro-structures on a substrate and "surface micro-machining" may comprise the fabrication of micro-structures by deposition and patterning of thin films.

The dielectric membrane may be suspended such that there is a first gap between the dielectric membrane and the substrate portion. The dielectric membrane layer may comprise one or more openings.

The portion of the cap layer may be suspended such that there is a second gap between the portion of the cap layer and the dielectric membrane. For example, the cap layer may be formed on a sacrificial layer between the dielectric membrane and the cap layer, and the second gap may comprise a removed (e.g. etched) portion of the sacrificial layer.

The cap layer can provide a route for heat transfer from the heater through the gas and to the ambient, so allowing to increase the percentage of heat transferred through the gas and, therefore, increasing the sensitivity of the thermal conductivity sensor.

In particular, a micro-machined cap layer can advantageously enable very precise control of the second gap on a side of the dielectric membrane opposite to the first gap, such that the distance between the dielectric membrane and the cap layer surface (i.e. the thickness of the second gap) is within the distance of the device thermal boundary layer. In other words, the cap layer can be formed very close to the dielectric membrane, and this may increase the percentage of heat transferred through the gas (e.g. air) to the cap layer, further increasing the sensitivity of the sensor. For example, the sensitivity may be increased relative to a cap layer formed by wafer bonding, or at packaging level.

As the skilled person will understand, where the dielectric membrane and the cap layer surface are within the distance of the device thermal boundary layer there will be an increase in the percentage of heat transferred between the heater and the surface of the cap layer, through the gas in the second gap, thus increasing the proportion of heat transferred through the gas. To significantly improve performance, however, the thickness of the second gap may be much less than the thermal boundary layer, for example a second gap of 20 µm or less. As the distance between the dielectric membrane and the cap layer reduces, the effect will be more significant, meaning a tightly controlled minimum distance is particularly advantageous.

The cap layer may be formed in direct contact with the dielectric layer. For example, the cap layer may be micro-machined such that a portion of the cap layer is shaped around the second gap.

In some examples, a thickness of the second gap is 20 µm or less.

The second gap may be configured such that the thickness of the gap is smaller than 0.5 times, e.g. smaller than 0.25 times, the width of the dielectric membrane, in a direction through the centre of the dielectric membrane.

In some examples, the thickness of the second gap is between 0.25 and 4 times a thickness of the dielectric membrane.

In some examples, a thickness of the cap layer is 5 µm or less.

Further advantageously, a thermal conductivity sensor comprising a micro-machined cap layer may be simpler and more cost-effective to manufacture, e.g. in comparison to a sensor having a cap layer formed by wafer bonding, or at packaging level.

The sensor may comprise: a substrate portion; an intermediate layer disposed on the substrate portion; and a semiconductor layer disposed on the intermediate layer. For example, the substrate portion may comprise silicon. The intermediate layer may comprise a dielectric. The intermediate layer may comprise an oxide (e.g. silicon dioxide). The semiconductor layer may comprise silicon.

In some examples, the substrate portion, the intermediate layer, and the semiconductor layer may be collectively referred to as a "substrate" and/or a "chip". For example, the sensor may comprise a SOI chip (e.g. formed from a SOI wafer), the SOI chip comprising the substrate portion (also referred to as a semiconductor substrate portion), the intermediate layer, and the semiconductor layer.

Collectively, the substrate portion, the intermediate layer, and the semiconductor layer may be referred to as a "wafer", for example a silicon-on-insulator (SOI) wafer from which a number of sensors can be formed.

Advantageously, the thermal conductivity sensor may be manufactured using SOI technology.

In some examples, the substrate portion comprises a semiconductor material such as silicon, silicon carbide, polysilicon, and/or poly silicon carbide. In some examples, the substrate comprises a SOI material, or a SOI wafer. In some examples, the substrate comprises a glass. In some examples, the substrate comprises sapphire. In some examples, the substrate comprises a semi-insulating material such as semi-insulating silicon carbide. In some examples, the substrate comprises a combination of dielectric and semiconductor materials.

The cap layer may comprise a metal, or other thermally conductive material. For example, a metal cap layer may act as a thermal plate leading to a more favourable thermal path from the heater to the ambient, further providing a higher sensitivity of the sensor to a given gas. Examples of suitable metals may include complementary metal-oxide-semiconductor (CMOS) metals such as aluminium, tungsten, copper, and/or titanium. Examples of other suitable thermally conductive materials may include polysilicon and/or silicon.

In some examples, the cap layer comprises a dielectric material, such as silicon nitride and/or oxynitride. Advantageously, a dielectric material can have a low, or lower (e.g. than metal), thermal conductivity, meaning that heat transfer through the cap layer is minimised and so resulting in reduced power consumption by the thermal conductivity sensor.

In some examples, the cap layer comprises a plurality of sub-layers including metal sub-layers, and/or dielectric sub-layers.

In some examples, the thermal conductivity sensor comprises a first sacrificial layer between the dielectric membrane and the substrate portion. The first sacrificial layer may comprise a first gap. The first gap may be formed by removing (e.g. etching) one or more portions of the first sacrificial layer. The substrate portion and the first sacrificial layer may be collectively referred to as a "substrate" and/or a "chip". For example, the first sacrificial layer may comprise a dielectric (e.g. oxide, silicon nitride), and/or a semiconductor material (e.g. silicon, polysilicon). For example, the first gap may comprise an etched portion of a semiconductor layer and/or an insulator layer of a wafer (e.g. a SOI wafer). In some examples, the first sacrificial layer may be between 1 µm and 5 µm thick.

In examples according to the claims, the thermal conductivity sensor comprises a second sacrificial layer between the cap layer and the dielectric layer. The second gap comprises a removed (e.g. etched) portion of the second sacrificial layer. For example, the second sacrificial material may comprise a dielectric (e.g. silicon nitride), a polymer (e.g. polyamide), and/or a semiconductor material (e.g. polysilicon). In some examples, the second sacrificial layer may be up to 20 µm thick.

The thermal conductivity sensor may comprise a third sacrificial layer. For example, where the first sacrificial layer comprises a semiconductor layer of a substrate (e.g. a SOI substrate), the third sacrificial layer may comprise an insulator layer of a substrate (e.g. a SOI substrate), the insulator layer being disposed on the semiconductor layer. For example, the third sacrificial layer may comprise an insulator, or dielectric, such as an oxide. The third sacrificial layer may comprise a buried oxide layer of a SOI substrate. In some examples, the third sacrificial layer may be between 50 nm and 3 µm thick.

In some examples, the first gap comprises a removed (e.g. etched) portion of the substrate.

In some examples, the cap layer comprises an opening, referred to as a cap opening. For example, the cap opening may be such that the second gap is in fluid communication with the external atmosphere.

In some examples, the dielectric membrane is a primary dielectric membrane, and the thermal conductivity sensor further comprises a reference dielectric membrane provided with a reference heater. The reference dielectric membrane is located over a reference gap. The reference dielectric membrane, the reference heater and the reference gap together provide a reference portion in the sensor of the disclosure, in addition to the primary portion as described above. The primary dielectric membrane is exposed to the external atmosphere whereas the reference dielectric membrane is disposed in a sealed chamber.

Advantageously, the reference portion of the sensor may enable compensation for any environmental changes, such as changes in temperature, that would otherwise affect the gas concentration measurement. The reference portion may also compensate for other effects, such as common mode noise in the circuitry of supply voltage and any noise that is common to the primary and reference heaters and/or to any additional temperature sensors.

In some examples, the primary dielectric membrane and the reference dielectric membrane may be on two different chips (e.g. formed on two different substrates). One chip, provided with the reference dielectric membrane, may be in a sealed package, while the primary dielectric membrane, on the other chip, may be exposed to the external atmosphere. Alternatively, the dielectric membranes may be on a same chip (e.g. a same substrate) and the package may comprise two parts: one sealed, so as to isolate the reference dielectric membrane, from the external atmosphere in a sealed chamber, and one exposed so that the primary dielectric membrane is exposed to the external atmosphere.

In some examples, the sealed chamber may contain a vacuum, or a gas such as nitrogen, dry air, and/or any other gas or mixture of gases. Since pressure can affect the thermal conductivity of a gas, and in turn, the sensor behaviour, when the primary membrane is exposed to atmospheric air, preferably, the sealed chamber contains dry air, substantially at atmospheric pressure, in order to minimise any effects due to the difference in the properties and behaviour of the gas to which the membranes are exposed. It will be understood that, if specific applications require the primary membrane to be exposed to an external atmosphere or external environment which is different from atmospheric air, the sealed chamber may preferably contain a gas or gas mixture similar to that of the external environment and preferably at the same pressure.

A dielectric membrane that is exposed to the external atmosphere may be disposed in a chamber that is in fluid communication with the external atmosphere.

The primary dielectric membrane may be disposed in a primary chamber. The primary chamber may be exposed to the external atmosphere (e.g. in fluid communication with the external atmosphere, for example, via a cap opening in the cap layer. The reference dielectric membrane may be disposed in a reference chamber. The reference chamber may be a sealed chamber. For example, the reference chamber may be sealed by the cap layer.

The thermal conductivity sensor may comprise a primary cavity. The primary cavity may be in fluid communication with the primary chamber and/or the external atmosphere. The thermal conductivity sensor may further comprise a reference cavity. The reference cavity may be in fluid communication with the reference chamber.

The reference cavity may advantageously provide an increased volume for the sealed reference portion. As it will be understood, in some instances, the seal of the sealed portion may not be perfect and a leak, however small, may be present, into, or out of, the reference portion. An increased volume of the sealed reference portion means that the change in the amount or composition of the gas in the reference portion caused by any leak may be reduced, as a proportion of the total volume, with respect to the change caused by the same leak affecting the gas in the reference chamber alone. Decreasing the effect of a leak, by increasing the volume of the sealed reference portion, may prolong the lifetime of the sensor, and/or prolong the time between successive calibrations.

The thermal conductivity sensor may additionally comprise a primary cavity so that the total volume occupied by the gas in the primary portion and the reference portion is the same.

Preferably, the primary cavity and the reference cavity (and/or the primary chamber and the reference chamber) show substantially the same (or as similar as possible) thermal properties and thermal behaviour. They may comprise the same material or materials and, preferably, the same geometry and size.

The primary cavity, and/or the reference cavity, may be provided in the substrate portion, e.g. they may be formed by etching the substrate portion.

The primary cavity, and/or the reference cavity, may be in fluid communication with the primary chamber, or the reference chamber, respectively, via one or more openings in the intermediate layer. In some examples, the one or more openings in the intermediate layer may advantageously facilitate removing material (e.g. by etching) from the substrate portion to form the reference cavity and/or the primary cavity.

In some examples, the reference cavity may contain a vacuum, or a gas such as nitrogen, dry air, and/or any other gas or mixture of gases, as discussed above in relation to the reference chamber.

It will be understood that when the primary portion and the reference portion are provided on separate chips, each or either chip may be provided with a respective cavity in the same way.

The primary portion may comprise a pressure sensor. The reference portion may comprise a reference pressure sensor.

Any of the pressure sensors may be a capacitive pressure sensor where a pair of metal plates, which form a capacitor, are arranged in the device so that a change in the external atmospheric pressure causes a deformation of the membrane and/or the cap layer so that the distance between the metal plates changes and, with it, the capacitance of the capacitor. The described arrangement, therefore, provides a capacitive pressure sensor. For example, the metal plates may be arranged on opposite sides of the gap or the second gap (e.g. one metal plate on a surface of the dielectric membrane opposite the cap layer, and one metal plate on a surface of the cap layer, opposite the dielectric membrane).

The metal plates may comprise aluminium, tungsten, titanium, platinum or gold or any other suitable metal or alloy.

Any of the pressure sensors may comprise a piezoresistor. The piezoresistor may be disposed in a layer of the thermal conductivity sensor, e.g. the cap layer. A change in the atmospheric pressure may cause a deformation of the layer where the piezoresistor is provided. The deformation of the layer may cause the deformation of the piezoresistor which may result in a change in resistance of the piezoresistor. For example, the piezoresistor may comprise doped single crystal silicon or polysilicon or any other suitable material.

In embodiments comprising a reference pressure sensor and a primary pressure sensor, the reference pressure sensor may detect changes in pressure between the pressure in the sealed chamber and the ambient pressure. The primary pressure sensor may be used to determine a more accurate value of the pressure of the external atmosphere e.g. using the reading from the reference pressure sensor. The reading from the primary pressure sensor is used to correct any effects of the ambient temperature. The temperature of the gas in the sealed chamber may, generally, be substantially the same or very close to the ambient temperature, so that the difference between the ambient temperature and the temperature of the sealed chamber, if any, will not have a significant effect on the pressure sensors. The two pressure sensors may be set up in a differential mode, for example, using a Wheatstone bridge and a differential amplifier. When further pressure and/or temperature sensors are provided, they may be arranged in a double Wheatstone bridge, wherein each Wheatstone bridge comprises four sensors, for example to compensate for changes in the ambient temperature.

In some examples, the heater (either provided to the primary membrane and/or to the reference membrane) may comprise one or more of tungsten, platinum, titanium, molybdenum, polysilicon, single crystal silicon, and/or aluminium or any other suitable material.

In some examples, the heater comprises a transistor.

In some examples, the heater is configured to function as a temperature sensor.

In some examples, the dielectric membrane (e.g. the primary dielectric membrane and/or the reference dielectric membrane) is further provided with a temperature sensor. For example, the dielectric membrane may be provided with a temperature sensor in addition to the heater.

In some examples, the temperature sensor comprises a resistor.

In some examples, the temperature sensor comprises a material having a high temperature coefficient of resistance (TCR). For example, the temperature sensor may comprise a material having a higher TCR than the TCR of tungsten.

Advantageously, a temperature sensor comprising a material having a high TCR may provide an improved sensitivity.

In some examples, the temperature sensor comprises vanadium oxide, amorphous silicon, and/or germanium. Advantageously, vanadium oxide, amorphous silicon, and germanium are high TCR materials.

In some examples, where the dielectric membrane is provided with a the temperature sensor, the temperature sensor is positioned relative to the heater so the temperature sensor is sufficiently removed from the heater that the temperature sensor is not heated to be the same temperature as the heater. For example, the temperature sensor may be positioned in a region of the dielectric membrane that is at higher temperature than ambient, but at lower temperature than the heater. Advantageously, positioning the temperature sensor in this way may ensure that the temperature sensor is more stable and exhibits reduced drift over time.

For example, the temperature sensor may be laterally spaced from the heater (e.g. the temperature sensor may be laterally spaced from the heater within the dielectric membrane).

In some examples, the dielectric membrane may be configured to have two microbridges (e.g. structures formed by providing three openings in the dielectric layer). The heater may be arranged on (and/or in) a first microbridge of the two microbridges. The temperature sensor may be arranged on (and/or in) a second microbridge of the two microbridges. Arranging the heater and the temperature sensor on separate microbridges, in use, may provide sufficient thermal isolation of the temperature sensor from the heater so as to enhance the stability of the temperature sensor.

In some examples, the temperature sensor may be spaced away from a centre region of the dielectric membrane. For example, the temperature sensor may have a shape which may extend away from the centre region of the dielectric membrane. As the centre region of the dielectric membrane tends to be the part of the dielectric membrane at the highest temperature, by being removed from the centre region, the temperature sensor may be more stable and less prone to drift over time.

In particular, combining one or more of the above arrangements of the temperature sensor with a temperature sensor comprising a high TCR material (e.g. vanadium oxide, amorphous silicon, and/or germanium) may provide a highly stable temperature sensor that is less prone to drift.

The thermal conductivity sensor may be provided with an application-specific integrated circuit (ASIC). For example a substrate portion or chip of the thermal conductivity sensor may comprise an ASIC and/or other circuitry.

Also described herein is a method of manufacturing a thermal conductivity sensor for measuring a concentration of a gas. The method comprises forming a dielectric layer on a substrate portion. The method may comprise forming a dielectric membrane in the dielectric layer, wherein the dielectric membrane is located such that there is a first gap between the dielectric membrane and the substrate portion. The method may comprise providing the dielectric membrane with a heater. The method may comprise forming a cap layer, a portion of the cap layer being located such that there is a second gap between the portion of the cap layer and the dielectric membrane.

Forming the cap layer may comprise micro-machining the cap layer. For example, forming the cap layer may comprise forming the cap layer by surface micro-machining.

In some examples, the cap layer is formed (and/or manufactured) using a micro-machining technique.

Forming the cap layer may provide a route for heat transfer from the heater to ambient in a thermal conductivity sensor manufactured according to the present disclosure.

In particular, a cap layer formed by micro-machining can advantageously enable very precise control of the second gap on a side of the dielectric membrane opposite to the first gap. That is, the cap layer can be formed very close to the dielectric membrane, which can increase the percentage of heat transferred through the gas (e.g. air) to the cap layer, further increasing the sensitivity of the sensor. For example, the sensitivity may be increased relative to a thermal conductivity sensor comprising a cap layer formed by wafer bonding, or at packaging level.

In some examples, forming the cap layer comprises forming a cap layer having a thickness of 5 µm or less.

In some examples, the method provides a thickness of the second gap of 20 µm or less.

Further advantageously, the method described herein may provide a simpler and more cost-effective process for manufacturing a thermal conductivity sensor, e.g. in comparison to methods in which a cap layer is formed by wafer bonding, or at packaging level.

The method may comprise forming the dielectric layer on a first sacrificial layer, the first sacrificial layer being between the dielectric layer and the substrate portion. The method may comprise forming one or more openings in the dielectric layer. The method may comprise removing (e.g. by etching) a portion of the first sacrificial layer to form a first gap, in the first sacrificial layer, and a dielectric membrane over the first gap and in the dielectric layer, the dielectric membrane being provided with the heater.

For example, the first sacrificial layer may comprise a semiconductor layer and/or an insulator layer. The substrate portion and the sacrificial layer may be collectively referred to as a "substrate" and/or a "chip". In some examples the substrate or the chip may be a SOI substrate.

In some examples, removing (e.g. by etching) the first sacrificial layer comprises providing an etchant through the one or more openings in the dielectric layer. Advantageously, forming the openings in the dielectric layer may enable simplified removal of one or more portions of the first sacrificial layer, e.g. by etching.

The method comprises forming the second sacrificial layer on the dielectric layer, opposite to the first sacrificial layer and forming the cap layer on the second sacrificial layer. The method may comprise removing (e.g. by etching) a portion of the second sacrificial layer to form the second gap.

The second sacrificial layer may comprise a dielectric (e.g. silicon nitride), a polymer (e.g. polyamide), and/or a semiconductor material (e.g. polysilicon). In some examples, the second sacrificial layer may be up to 20 µm thick.

The cap layer may be formed such that part of the cap layer is in direct contact with the dielectric layer, and such that the portion of the cap layer that is to be located over the second gap is formed over the second sacrificial layer.

The method may comprise forming a cap opening in the cap layer. Removing the portion of the second sacrificial layer may comprise providing an etchant through the cap opening.

The method may comprise removing (e.g. by etching) a portion of the substrate to form the first gap.

### BRIEF DESCRIPTION OF THE DRAWINGS

Some embodiments of the disclosure will now be described by way of example only and with reference to the accompanying drawings, in which:
Figure 1 illustrates a cross-section of an example of a thermal conductivity sensor according to the present disclosure;
Figure 2 illustrates a cross-section of an example of an alternative thermal conductivity sensor according to the present disclosure;
Figures 3a and 3b illustrate a cross-section of examples of thermal conductivity sensors in which the first gap is formed in the substrate portion;
Figure 4 illustrates a cross-section of an example of a thermal conductivity sensor comprising a reference membrane;
Figure 5 illustrates a cross-section of an example of a thermal conductivity sensor comprising a capacitive pressure sensor pair of metal plates;
Figure 6 illustrates a cross-section of an example of a thermal conductivity sensor comprising a pressure sensor comprising two pairs of piezoresistors;
Figure 7 illustrates a cross-section of an example of a thermal conductivity sensor manufacturable by SOI technology;
Figure 8 illustrates a cross-section of an example of a thermal conductivity sensor comprising a cavity in the substrate portion;
Figure 9 illustrates a top view of an example of a thermal conductivity sensor according to the present disclosure;
Figure 10 illustrates a top view of a thermal conductivity sensor comprising a dielectric membrane in the form of a micro-bridge;
Figure 11 illustrates a top view of an example of a thermal conductivity sensor comprising a temperature sensor;
Figure 12 illustrates a top view of an example of a thermal conductivity sensor comprising a dielectric membrane in the form of two microbridges, comprising a heater on a first microbridge of the two microbridges, and a temperature sensor on a second microbridge of the two microbridges;
Figure 13 illustrates a top view of an example of a thermal conductivity sensor comprising a temperature sensor which is not in the centre of the dielectric membrane;
Figure 14 illustrates a cross-section of an example of a thermal conductivity sensor comprising one or more temperature sensors disposed in a different layer of the dielectric membrane to one or more heaters;
Figure 15 schematically illustrates an example of a method for manufacturing a thermal conductivity sensor according to the present disclosure;
Figure 16 (A)-(O) illustrates steps of a possible method for manufacturing a thermal conductivity sensor; and
Figure 17 (A)-(P) illustrates steps of another possible method for manufacturing a thermal conductivity sensor.

### DETAILED DESCRIPTION

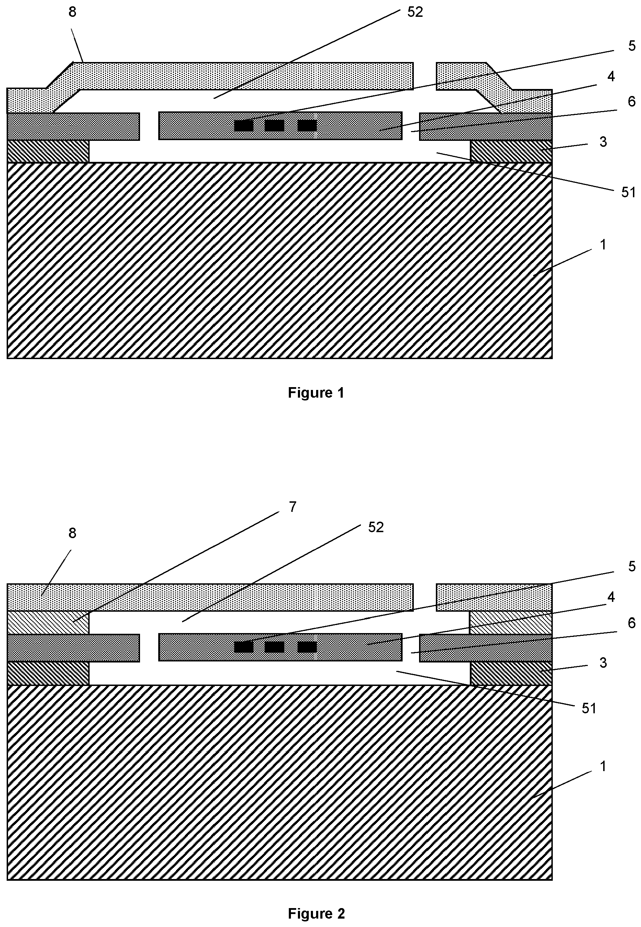

Figure 1 illustrates an example of a thermal conductivity sensor (also referred to herein as a device) according to the present disclosure. As illustrated in Figure 1, the thermal conductivity sensor comprises a substrate portion 1 (e.g. a silicon substrate portion), and a first sacrificial layer 3. The first sacrificial layer 3 may comprise, for example, a semiconductor layer and/or an insulator layer. The first sacrificial layer 3 and the substrate portion 1 may form a substrate or chip, for example a silicon-on-insulator (SOI) substrate.

The thermal conductivity sensor illustrated in Figure 1 further comprises a dielectric layer 24, and a dielectric membrane 4 formed in the dielectric layer 24. For example, the dielectric layer 24 and the dielectric membrane 4 may comprise silicon oxide or silicon nitride, or some other dielectric. Preferably, the dielectric membrane 4 comprises low stress low pressure chemical vapour deposition (LPCVD) silicon nitride, or plasma-enhanced chemical vapour deposition (PECVD) silicon nitride. The dielectric membrane 4 can also comprise more than one layer of the same or different materials.

A first gap 51 is present between the dielectric membrane 4 and the substrate portion 1.

A heater 5 is disposed (e.g. embedded) within the dielectric membrane 4. The heater 5 may be a resistive heater (i.e. the heater 5 may comprise a resistor). The heater 5 may comprise tungsten, platinum, titanium, molybdenum, polysilicon, single crystal silicon, and/or aluminium. In some examples, the heater 5 comprises a diode. In some examples, the heater 5 comprises a metal-oxide-semiconductor field-effect transistor (MOSFET).

The dielectric layer 24 comprises one or more openings 6. The opening(s) 6 allow(s) the target gas to reach underneath the membrane (e.g. into the first gap 51), allowing more surface area for gas measurement. Particularly, the small distance between the membrane 4 and the substrate portion 1 means a higher percentage of heat transferred from the membrane 4, through the gas to the substrate and so increases device sensitivity. The opening 6 may also be useful during fabrication to be able to etch the first sacrificial layer 3 underneath the dielectric layer 24.

There may be additional layers (e.g. layers of material) between the first sacrificial layer 3 and the dielectric layer 24.

A device according to the present disclosure may comprise a membrane 4 formed on top of the thin layers of the substrate. This allows a very small and well-controlled first gap 51 between the membrane and the surface of the first gap opposite to the membrane 4, which can increase the device sensitivity due to higher percentage of heat transferred through the gas from the membrane 4 to the surface of the first gap opposite to the membrane 4. Because the thickness of the first gap 51 can be easily controlled by the thickness of the sacrificial layer 3, the reproducibility of such sensor is also improved.

In one example, the first gap 51 may be formed by providing a substrate portion 1, depositing a sacrificial layer 3 on the substrate portion 1, and forming a dielectric layer 24 above the sacrificial layer 3, followed by removing part of the sacrificial layer 3. The thickness of the sacrificial layer 3 can be precisely controlled. While a lower thickness is better for sensitivity, it can result in manufacturing and reliability issues due to tolerance and bending of the membrane. However, to deposit a sacrificial layer to the desired thickness may require a long and/or costly process, therefore, using an SOI or similar substrate may be advantageous.

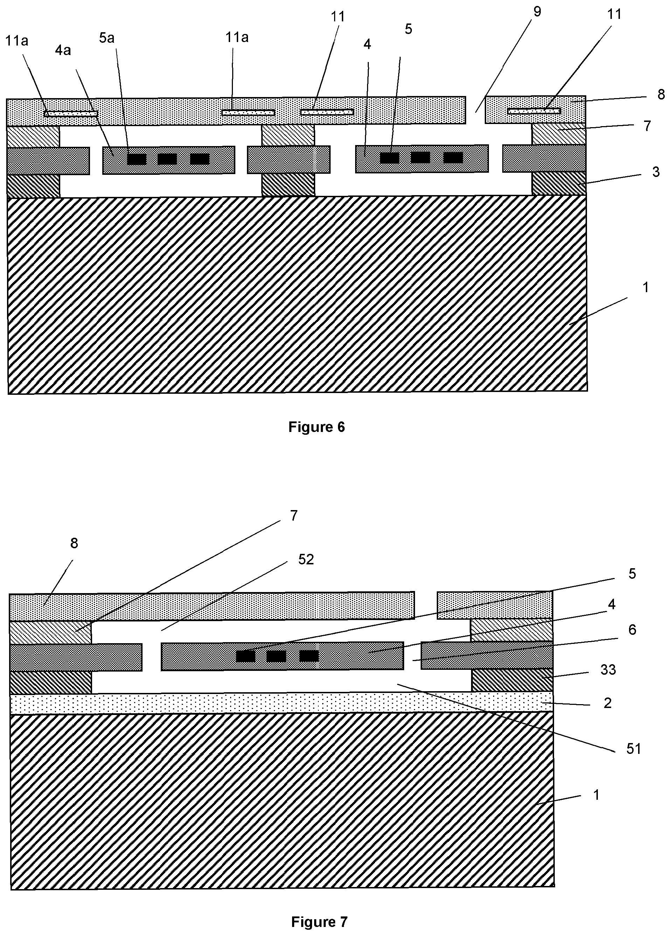

The thermal conductivity sensor according to the present disclosure can be manufactured using SOI technology. This is based on a buried layer of oxide sandwiched between a top silicon layer and a bottom, much thicker, silicon substrate portion (where, in Figure 1, the top silicon layer and the buried layer of oxide form the first sacrificial layer 3; see Figure 7 for further details). Both the thickness of the top silicon layer and the buried oxide can be well controlled. Several methods exist to manufacture SOI substrates, from Smart cut to wafer bonding. The thickness of the top silicon layer may be increased, if desired, by growing an additional epitaxial silicon layer. In some examples, the top silicon layer may have a thickness between 100 nm and 50 µm. In some examples, the bottom silicon substrate may have a thickness between 50 µm and 500 µm.

The use of SOI substrates allows for the top silicon and/or the buried oxide of the wafer to be used as sacrificial layers and create etched portions with very well controlled dimensions.

The thermal conductivity sensor illustrated in Figure 1 comprises a cap layer 8.

In an embodiment according to the claims, the cap layer 8 is formed by surface micro-machining.

A portion of the cap layer 8 is located such that there is a second gap 52 between the cap layer 8 and the dielectric membrane 4. Where the cap layer 8 is formed by micro-machining, a cap layer 8 can be formed that is very close to the dielectric membrane 4 (for example, the second gap 52 may be 20 µm thick or less).

A cap layer 8 that is close to the dielectric membrane 4 can provide an increased device sensitivity because the percentage of heat transferred through the gas to the cap layer 8 is increased.

In the example illustrated in Figure 1, part of the cap layer 8 is in direct contact with the dielectric layer. The cap layer 8 illustrated in Figure 1 may be formed partly over a sacrificial layer (referred to as a second sacrificial layer), so that a portion of the cap layer 8 is located over the second gap 52, following removal of the second sacrificial layer.

Figure 2 illustrates another example of a thermal conductivity sensor according to the present disclosure, in which the cap layer 8 is in contact with a second sacrificial layer 7, wherein a portion of the second sacrificial layer 7 has been removed to form the second gap 52. Alternatively, The layer 7 may be a separator layer 7 formed around the second sacrificial layer, at the same thickness of the second sacrificial layer, so that the cap layer 8 may be formed on the separator layer 7 and the second sacrificial layer. It will be understood that, after the formation of the cap layer 8, an opening will be formed in the cap layer 8 and the second sacrificial layer will be removed through the opening.

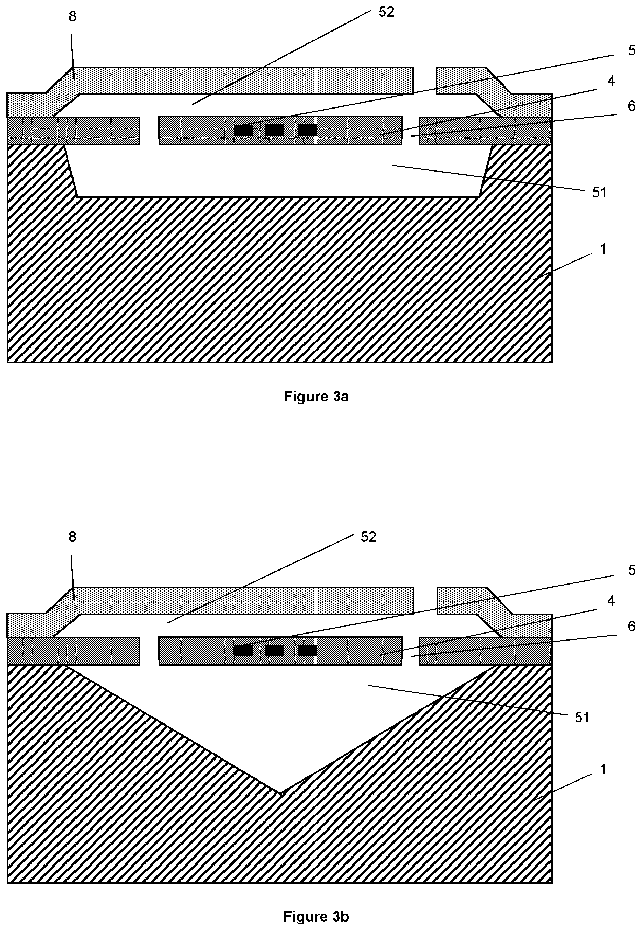

Figure 3a illustrates an example of a thermal conductivity sensor in which the first gap 51, between the dielectric membrane 4 and the substrate portion 1, is formed in the substrate portion 1, e.g. by etching part of the substrate portion 1. Figure 3b illustrates an alternative example of a thermal conductivity sensor in which the first gap 51, between the dielectric membrane 4 and the substrate portion 1, is formed in the substrate portion 1, with the first gap 51 having a different profile. It will be appreciated that the first sacrificial layer 3 may be omitted from the examples illustrated in Figures 3a and 3b.

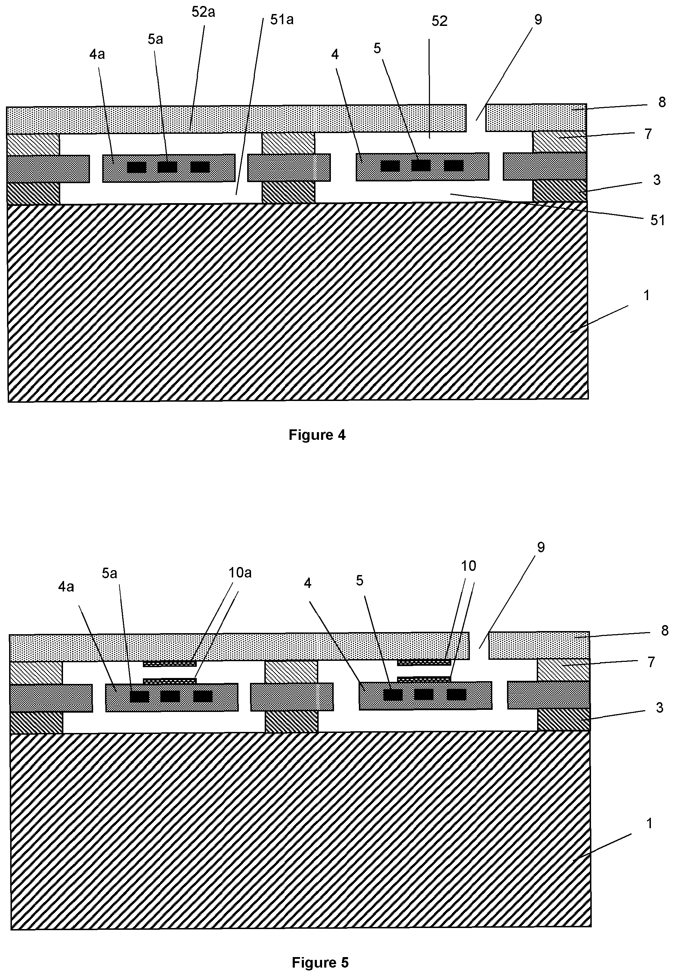

Figure 4 illustrates an example of a thermal conductivity sensor comprising a primary portion and a reference portion each comprising a respective dielectric membrane. The reference portion, on the right of Figure 4, has a continuous cap layer 8 which, together with the separator layer 7, the semiconductor layer 3 and the intermediate layer 2, forms a sealed reference chamber which isolates the reference membrane 4a from the external atmosphere. The primary portion, shown on the left of Figure 4, on the other hand, has a primary membrane 4 which is exposed to the atmosphere through a hole or opening 9. Figure 4 shows the opening 9 in the cap layer 8 but this is by no means limiting and the opening 9 may be located elsewhere as long as it provides a fluidic communication between the primary membrane 4 and the external atmosphere. The primary portion and the reference portion may be used in combination in a differential circuit.

As shown in Figure 4, the device comprises a first gap 51, referred to as a first primary gap, between a primary dielectric membrane 4 and the substrate portion 1, and a second gap 52, referred to as a second primary gap, between the primary dielectric membrane 4 and the cap layer 8. The device further comprises a first reference gap 51a, between the reference dielectric membrane 4a and the substrate portion 1, and a second reference gap 52a, between the reference dielectric membrane 4a and the cap layer 8.

In examples described herein comprising a primary dielectric membrane and a second primary gap, and a reference dielectric membrane and a second reference gap, the second primary gap may be configured such that the thickness of the second primary gap is smaller than 0.5 times, e.g. smaller than 0.25 times, the width of the primary dielectric membrane, in a direction through the centre of the primary dielectric membrane.

The second reference gap may be configured such that the thickness of the second reference gap is smaller than 0.5 times, e.g. smaller than 0.25 times, the width of the reference dielectric membrane, in a direction through the centre of the reference dielectric membrane.

In examples, the second primary gap may have a thickness between 0.25 and 4 times a thickness of the primary dielectric membrane. In some examples, the second reference gap may have a thickness between 0.25 and 4 times a thickness of the reference dielectric membrane.

In some examples, the second primary gap has a thickness of up to 20 µm. In some examples, the second reference gap has a thickness of up to 20 µm.

The reference dielectric membrane 4a may comprise a reference heater 5a.

In some examples, there may be two heaters on each membrane, connected so as to form a Wheatstone bridge or any other suitable differential circuit. In some examples, each membrane may be provided with a temperature sensor which is distinct from the respective heater(s). There may be two additional temperature sensors on each membrane connected up as a Wheatstone bridge, or any other differential circuit.

The sealed chamber of the reference portion may be kept under vacuum, or it may be filled with nitrogen, dry air, or any other mixture of gases at any pressure.

Figure 5 illustrates an example similar to the example illustrated in Figure 4, further comprising two pairs or metal plates 10 and 10a. These together with the cap layer 8 provide a capacitive pressure sensor in each of the portions of the device. The two pressure sensors can be used to correct effects of pressure and/or temperature variations on the sensor readings.

Figure 6 illustrates an example in which two pairs of piezoresistors 11 and 11a together with the cap layer 8 provide alternative pressure sensors.

Figure 7 illustrates an example of a thermal conductivity sensor similar to the example illustrated in Figure 1, where the thermal conductivity sensor is manufactured using SOI technology. In the example of Figure 7, the first sacrificial layer is a semiconductor layer 33 (e.g. silicon) disposed on an intermediate layer 2 (e.g. an oxide layer).

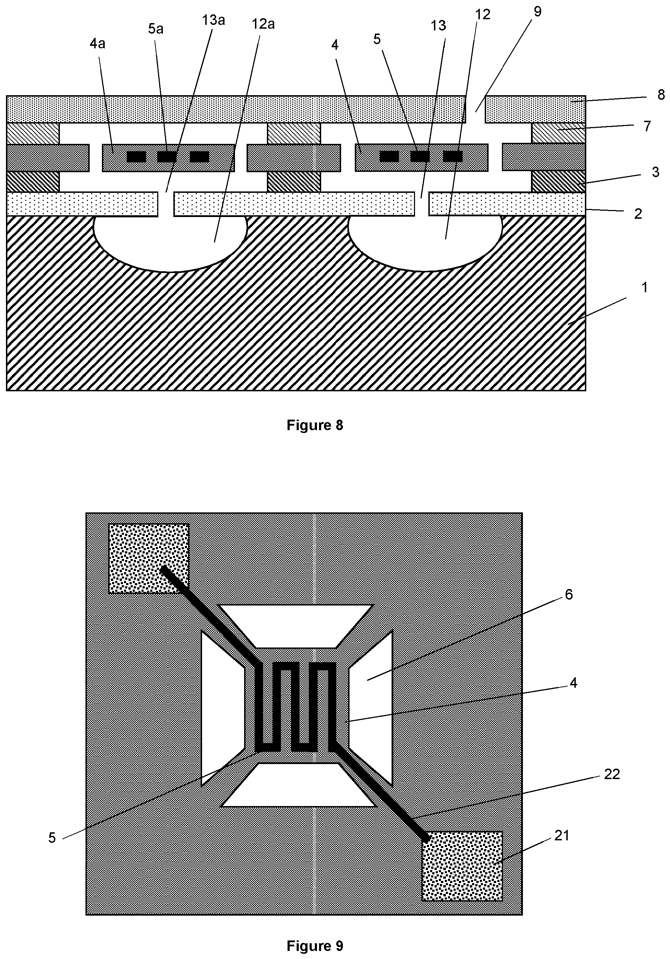

Figure 8 illustrates an example of a thermal conductivity sensor, similar to the example of Figure 4, comprising additional cavities 12, 12a in the substrate portion 1. The cavities 12, 12a may be formed by forming one or more holes or openings 13, 13a in the intermediate layer 2, and then performing, for example, an isotropic etch to remove some of the material of the substrate portion 1. The cavity 12a is in fluid communication with the corresponding first gap 51a and the second gap 52a, and it is sealed so as to be isolated from the external atmosphere.

The advantage of this structure that the amount of gas in the reference portion increases so as to reduce the impact of small leaks, if present, on the amount and/or concentration of gas in the reference region..

Figure 9 shows the top view of an example device. The membrane 4 is supported by four beams. The heater 5 is on the membrane 4, and a track 22 leads to bond pads 21.

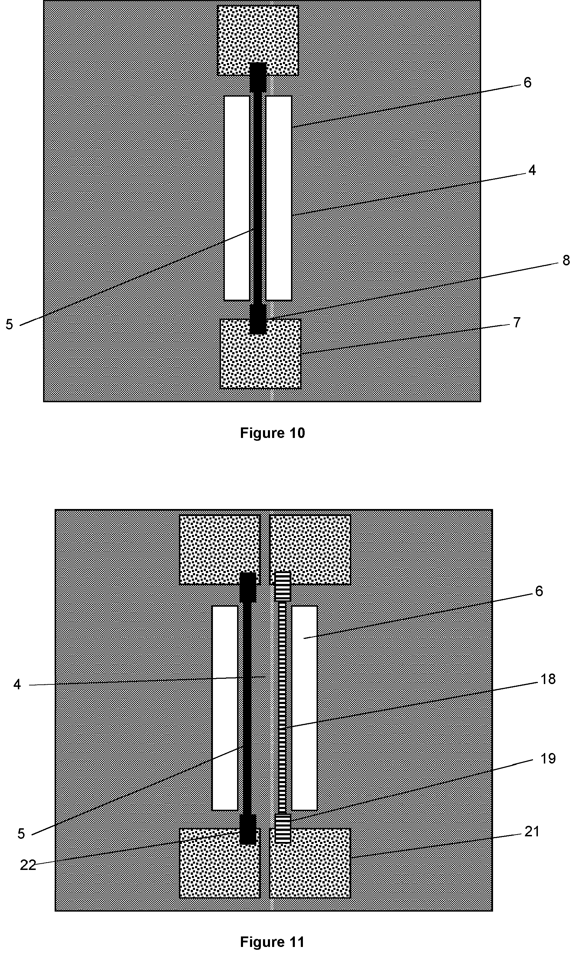

Figure 10 shows a membrane 4 in the form of a microbridge supported at two ends. For example, the microbridge may be formed by forming two openings 6 as slits.

Figure 11 shows a top view of a bridge type membrane comprising a temperature sensor 18. The temperature sensor is connected by a track 19 to the bond pads 21. The temperature sensor 18 may be a diode, a transistor or a thermopile. The temperature sensor 18 may, alternatively, be a resistive temperature sensor made of polysilicon, single crystal silicon or a metal such as tungsten, aluminium, gold or platinum or any other suitable material. Preferably, it is a resistive temperature sensor made of a material with a high TCR (temperature coefficient of resistance), such as vanadium oxide, amorphous silicon or germanium or the like. It is also possible to have a temperature sensor on membranes of different shapes and/or configurations.

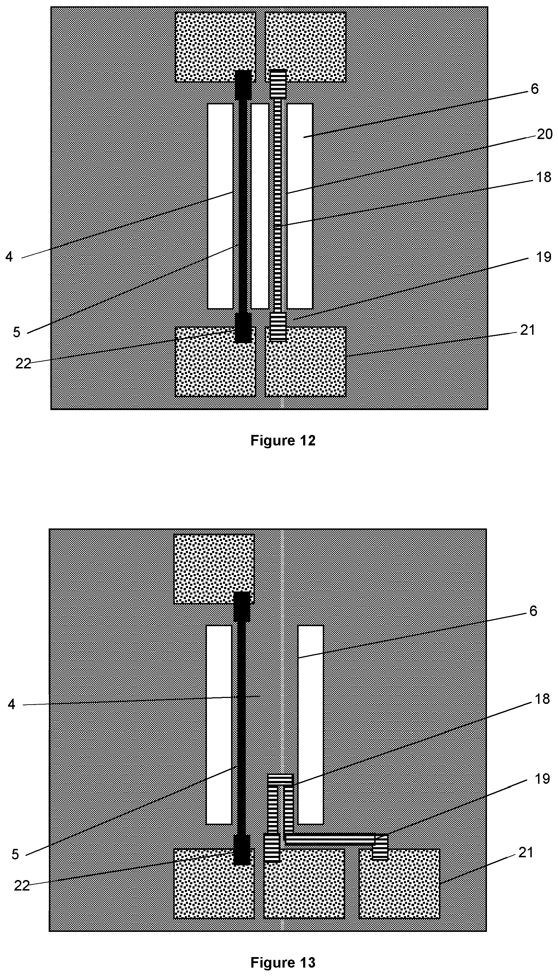

Figure 12 shows an example of a device with two microbridges. One microbridge has a heater 5, the other has a temperature sensor 18. Positioning the heater 5 and the temperature sensor 18 on different microbridges, in use, may provide thermal isolation of the temperature sensor 18 from the heater 5.

Figure 13 shows an example of a temperature sensor 18 which is spaced apart from the centre region of the membrane 4. For example, the temperature sensor 18 follows a path between bond pads 21 that avoids the centre region of the membrane 4. This is because, in use, the centre region is typically at higher temperature than the rest of the membrane 4. The temperature sensor is adjacent to (or embedded in) a region of the membrane 4 which is at higher temperature than ambient, but still at lower temperature than the heater. The advantage of this or similar configurations of the temperature sensor 18 is that, when used at temperatures lower than the temperature of the heater, the temperature sensor is more stable and has less drift over time. This may particularly be the case for high TCR materials such as vanadium oxide, germanium or amorphous silicon. In another example (not shown), the temperature sensor 18 may be laterally spaced from the heater 5 in an arrangement similar to the one shown in Figure 11, but the microbridge is wider than the one shown in Figure 12, so that the temperature sensor 18 may be positioned further away from the heater 5.

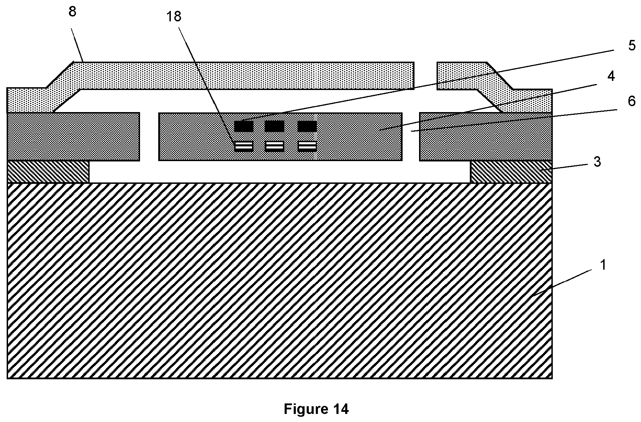

Figure 14 illustrates an example of a thermal conductivity sensor in which one or more temperature sensors 18 are disposed in a different layer of the dielectric membrane 4 to that of one or more heaters 5. While Figure 14 illustrates the heater(s) 5 above the temperature sensor(s) 18, it will be appreciated that the heater(s) 5 can also, or alternatively, be located below the temperature sensor(s) 18.

In some examples, a thermal conductivity sensor according to the present disclosure may include an ambient temperature sensor. The ambient temperature sensor may be configured to detect an ambient temperature. The ambient temperature may be used to calibrate measurements by the temperature sensor 18.

At least one temperature sensor (e.g. the ambient temperature sensor) may be located outside of the membrane region, in some examples.

The heater and temperature sensors have been shown as thin linear wires. However, it will be understood that they can also be in a circular or rectangular shape, such as a ring shape, a multi-ringed shape, or a meander shape or any other suitable shape.

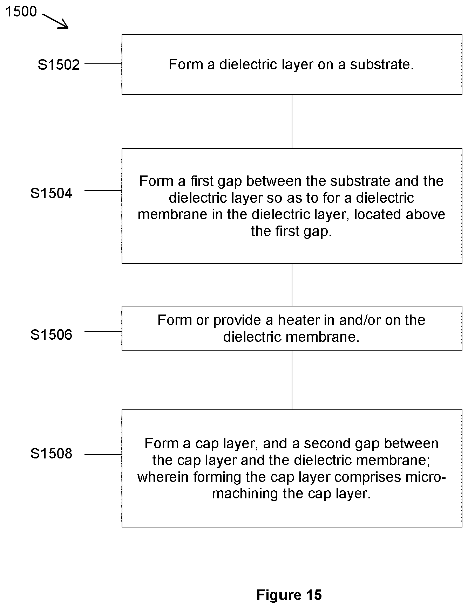

Figure 15 schematically illustrates an example of method 1500 of manufacturing a thermal conductivity sensor, for measuring a concentration of a gas, according to the present disclosure.

In a step S1502, the method 1500 comprises forming a dielectric layer on a substrate.

In a step S1504, the method 1500 comprises forming a first gap between the substrate and the dielectric layer so as to form a dielectric membrane in the dielectric layer, wherein the dielectric membrane is located above the first gap between the dielectric membrane and the substrate. Forming the dielectric membrane may comprise forming one or more openings in the dielectric layer.

In a step S1506, the method 1500 comprises forming or providing a heater in and/or on the dielectric membrane. It will be understood that forming or providing the heater in the dielectric membrane may take place during formation of the dielectric membrane.

In a step S1508, the method 1500 comprises forming a cap layer, and a second gap such that the second gap is located between the cap layer and the dielectric membrane. Preferably, forming the cap layer comprises micro-machining the cap layer.

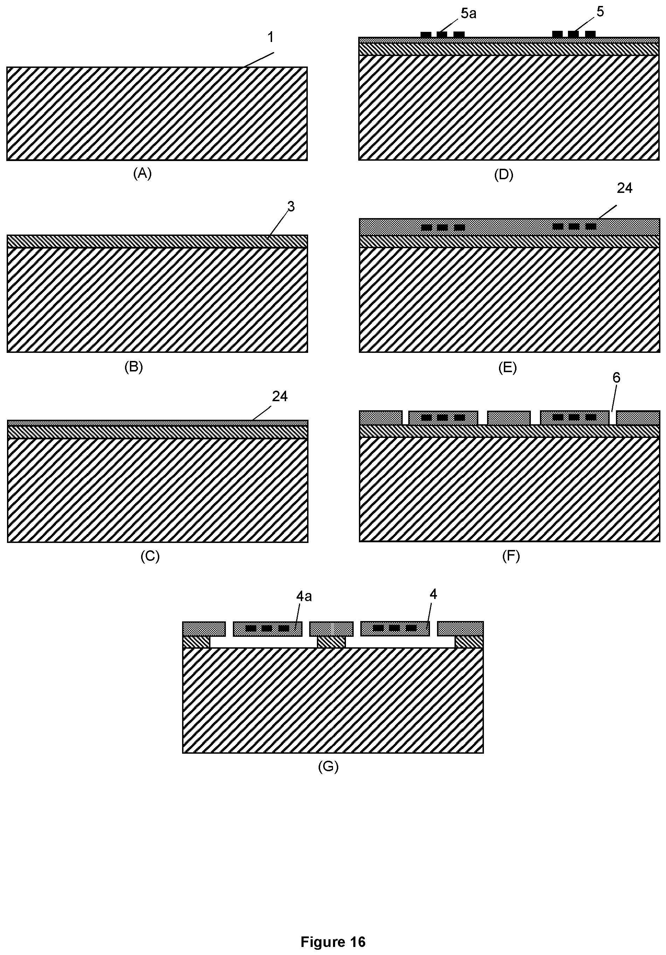

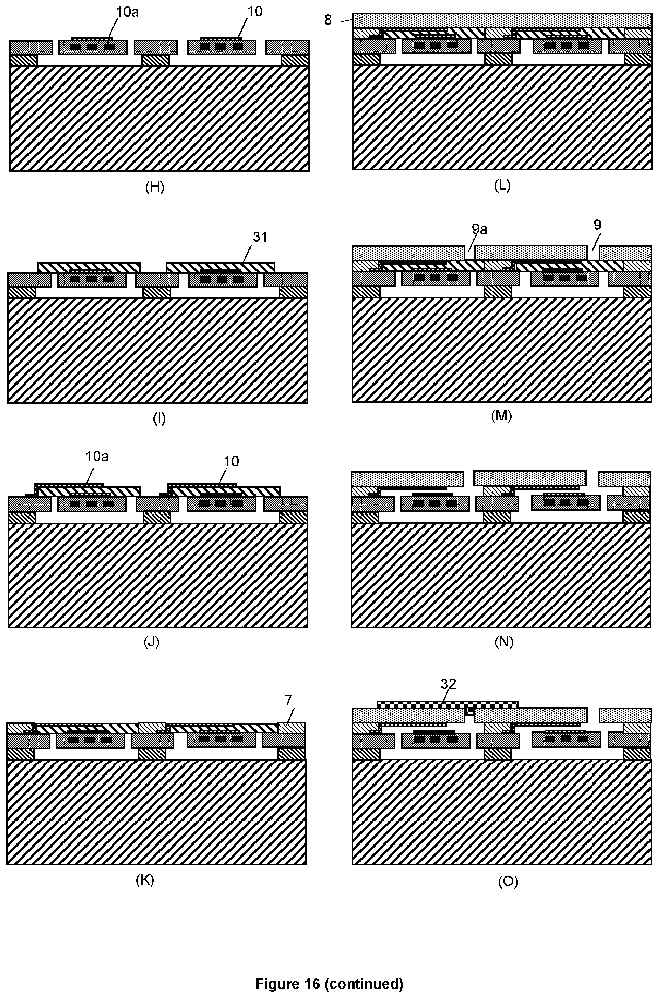

Figure 16 illustrates a possible method for manufacturing a thermal conductivity sensor according to the present disclosure, for example the thermal conductivity sensor illustrated in Figure 5, the method comprising the steps:
(A) Providing a substrate portion 1;
(B) Forming a sacrificial layer 3 (sacrificial layer 3 is preferably a dielectric material, but can also be a semiconductor material);
(C) Depositing an initial layer of a dielectric layer 24 on the sacrificial layer 3;
(D) Forming or providing heaters 5 and 5a on the initial layer of the dielectric layer 24 (Each heater may be a resistive heater made of metal, polysilicon, or even single crystal silicon; it is also possible to make the heater as a transistor, though this would involve a number of further fabrication steps);
(E) Depositing a further layer of the dielectric layer 24;
(F) Forming one or more holes in the dielectric layer 24;
(G) Removing part of the sacrificial layer 3, to create a first gaps 51 and 51a in the sacrificial layer 3, and membranes 4 and 4a, in the dielectric layer 24, above the respective first gaps 51 and 51a.
(H) Forming metal plates 10, 10a on the membranes 4 and 4a;
(I) Depositing another sacrificial layer 31 above the membranes 4 and 4a and metal plates 10, 10a;
(J) Forming metal plates 10 and 10a on the sacrificial layer 31, and extending on the dielectric layer 24;
(K) Depositing a separator layer 7 and patterning it;
(L) Depositing a cap layer 8;
(M) Forming holes 9 and 9a in layer 8,;
(N) Removing the sacrificial layer 31 through holes 9 and 9a;
(O) Closing hole 9a by means of a layer 32.

It should be noted that Figure 16(O) also shows an alternative embodiment of the device of the disclosure, comprising a hole 9a, above the reference portion, sealed by means of layer 32.

Alternative structures can be manufactured by skipping some of the above steps. For example, steps H and J can be skipped if the metal plates 10 and 10a are not required. Step K can be skipped, resulting is structures similar to the one shown in Figure 1.

Instead or in addition to one or more sets of metal plates 10, 10a, one or more piezoresistors may be formed or provided during the formation of the cap layer 8.

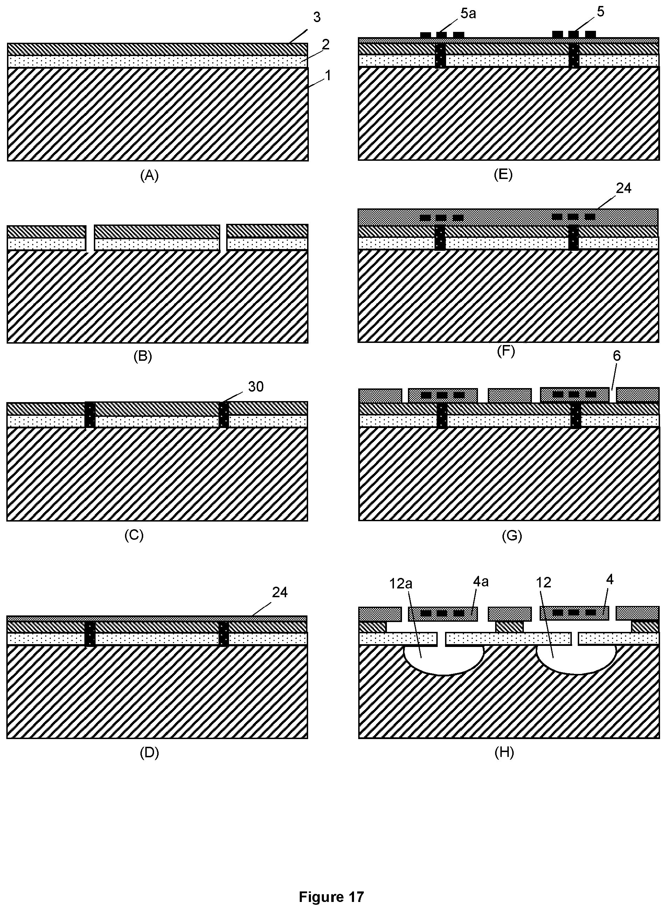

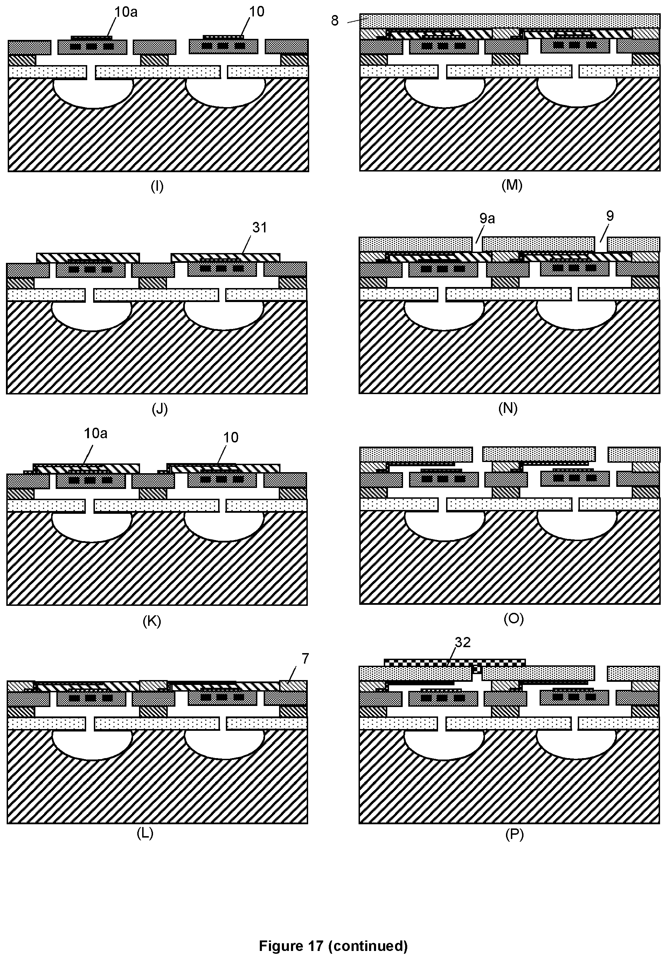

Figure 17 illustrates a further possible method for manufacturing a thermal conductivity sensor according to the present disclosure, for example a thermal conductivity sensor according to Figure 8:
(A) Providing a substrate comprising a substrate portion 1, an intermediate layer 2 and a semiconductor layer 3;
(B) Forming one or more holes in the semiconductor layer 3 and in the intermediate layer 2;
(C) Filling the holes, formed in step B, with a sacrificial material 30 (Preferably, the sacrificial material 30 is deposited so that its surface at the top is flush with the top surface of the semiconductor layer 3);
(D) Depositing an initial layer of a dielectric layer 24 on the semiconductor layer 3;
(E) Forming or providing heaters 5 and 5a (each heater may be a resistive heater made of metal, polysilicon, or even single crystal silicon; it is also possible to make the heater(s) as a transistor - this may involve a number of fabrication steps);
(F) Depositing an additional layer of the dielectric layer 24;
(G) Forming holes or apertures 6 in the dielectric layer 24;
(H) Removing part of the material of the semiconductor layer 3, the sacrificial layer 30 and part of the material of the substrate portion 1 (this creates gaps 51 and 51a in the semiconductor layer 3 and respective membranes 4 and 4a over the gaps 51 and 51a, and the cavities 12 and 12a: this may be done, for example, by etching, in a single step, using an etchant that etches the semiconductor layer 3, the sacrificial layer 30 and the substrate portion1; alternatively, this can be done in multiple steps: (i) etching part of the semiconductor layer 3; (ii) etching the sacrificial layer 30; (iii) etching the substrate portion 1);
(I) Forming metal plates 10, 10a on the membranes 4 and 4a;
(J) Depositing another sacrificial layer 31 on the membranes 4 and 4a and the metal plates 10, 10a;
(K) Forming metal plates 10 and 10a on the sacrificial layer 31, and extending on the dielectric layer 24;
(L) Depositing a separator layer 7 and patterning it;
(M) Depositing a cap layer 8;
(N) Creating holes 9 and 9a in layer 8;
(O) Removing the sacrificial layer 31 through holes 9 and 9a;
(P) Closing hole 9a by means of a layer 32.

In an alternative process, step H may be skipped. Instead, this step may be performed after step O, when the sacrificial layer 31 is removed.

Simpler structures may, of course, be created by skipping some of the above steps. For example, steps I and K can be skipped if the metal plates 10 and 10a are not required.

Instead or in addition to one or more sets of metal plates 10, 10a, one or more piezoresistors 11, 11a may be formed or provided during the formation of the cap layer 8.

Step L may be skipped if layer 7 is not required.

Steps I and K may be skipped if the metal plates 10,10a are not required.

If the cavities 12, 12a within the substrate portion 1 is not needed, then steps B and C may be skipped.

Step C may be skipped if the holes in the intermediate layer 2 and in the semiconductor layer 3 are small enough so as to prevent the dielectric material from entering the holes during the deposition step D.

It should be noted that many of the above steps illustrated in Figures 16and 17 can be performed using standard processes known in semiconductor/MEMS technology field, such as lithography, deposition by sputtering or chemical vapour deposition and etching.

Another example method of manufacturing a thermal conductivity sensor may comprise: starting with (e.g. obtaining or receiving) a substrate portion; depositing a dielectric layer; forming one or more holes within the dielectric layer; depositing a second sacrificial layer on the dielectric layer; depositing a cap layer on the second sacrificial layer; forming one or more holes within the cap layer; and removing part of, or the entire second sacrificial layer.

The method may comprise removing part of the substrate portion, e.g. by etching, either after creating the one or more holes within the dielectric layer, or as part of etching the second sacrificial layer. For example, a same etchant may be used to etch both the second sacrificial layer and the substrate portion, or different etchants may be used one after the other.

For example, a modified method may comprise: starting with (e.g. obtaining or receiving) a substrate portion; depositing a dielectric layer; creating one or more holes, or openings, within the dielectric layer; optionally removing one or more portions of the substrate portion; depositing a second sacrificial layer on the dielectric layer; depositing a cap layer above the second sacrificial layer; forming one or more holes, or openings, within the cap layer; removing part of, or the entire, second sacrificial layer; and, optionally, removing one or more portions of the substrate portion.

In another example, a method may comprise a process of depositing a first sacrificial layer. The first sacrificial layer may be removed after forming the holes in the dielectric layer, or as part of the removal of the second sacrificial layer and/or the substrate portion. For example, such a method may comprise: starting with (e.g. obtaining or receiving) a substrate portion; depositing a first sacrificial layer; depositing a dielectric layer; forming one or more holes, or openings, within the dielectric layer; optionally removing part of the first sacrificial layer; depositing a second sacrificial layer above the dielectric layer; depositing a cap layer on the second sacrificial layer; creating one or more holes, or openings, within the cap layer; etching part of, or the entire, second sacrificial layer; and, optionally, etching part of the first sacrificial layer.

If the entire first sacrificial layer is etched, the method may result in a thermal conductivity sensor similar to the one illustrated in Figure 1. Example methods in which only part of the first sacrificial layer is etched may result in a thermal conductivity sensor similar to the one illustrated in Figure 2.

The methods described herein may also involve depositing metal plates (e.g. to provide the device with a pressure sensors) before and after the deposition of the second sacrificial layer.

In examples of the methods described herein, the thickness of the second primary gap may be smaller than 0.5 times, e.g. smaller than 0.25 times, the width of the primary dielectric membrane, in a direction through the centre of the primary dielectric membrane. The thickness of the second reference gap may be smaller than 0.5 times, e.g. smaller than 0.25 times, the width of the reference dielectric membrane, in a direction through the centre of the reference dielectric membrane. In some examples, the second primary gap may have a thickness between 0.25 and 4 times a thickness of the primary dielectric membrane. In some examples, the second reference gap may have a thickness between 0.25 and 4 times a thickness of the reference dielectric membrane. In some examples, the second primary gap has a thickness of up to 20 µm. In some examples, the second reference gap has a thickness of up to 20 µm.

Forming the dielectric layer may also comprise other steps, such as depositing different layers of dielectric material, forming or providing a heater, and forming or providing a temperature sensor.

The skilled person will understand that in the preceding description and appended claims, positional terms such as 'above', 'below, 'under', 'lateral', etc. are made with reference to conceptual illustrations of an device, such as those showing standard cross-sectional perspectives and those shown in the appended drawings. These terms are used for ease of reference but are not intended to be of limiting nature. These terms are therefore to be understood as referring to a device when in an orientation as shown in the accompanying drawings.

## Claims

1. A thermal conductivity sensor for measuring a concentration of a gas, the sensor comprising:
a substrate portion (1);
a dielectric layer comprising a dielectric membrane (4), wherein the dielectric membrane is provided with a heater (5);
a first gap (51) between the substrate portion and the dielectric membrane wherein the dielectric membrane is located above the first gap; and
a surface micro-machined cap layer (8);
a second sacrificial layer (7) between the cap layer and the dielectric layer, wherein a second gap (52) is located in the second sacrificial layer.

2. The thermal conductivity sensor according to claim 1, wherein a thickness of the cap layer is 5 µm or less and/or, wherein the cap layer comprises at least one of a dielectric material, a metal, silicon and polysilicon.

3. The thermal conductivity sensor according to claim 1 or claim 2, wherein part of the cap layer is in direct contact with the dielectric layer.

4. The thermal conductivity sensor according to any one of the preceding claims, further comprising a first sacrificial layer (3), wherein the substrate portion and the first sacrificial layer are part of a chip, and wherein the first gap is formed in the first sacrificial layer of the chip.

5. The thermal conductivity sensor according to any one of the preceding claims, wherein the second gap has a thickness of 0.5 times or less the width of the dielectric membrane.

6. The thermal conductivity sensor according to any one of the preceding claims, wherein the second gap has a thickness between 0.25 and 4 times a thickness of the dielectric membrane.

7. The thermal conductivity sensor according to any one of the preceding claims, wherein a thickness of the second gap is 20 µm or less.

8. The thermal conductivity sensor according to any one of the preceding claims, comprising a first sacrificial layer between the dielectric membrane and the substrate portion, wherein the first gap is further located in the first sacrificial layer and, optionally, in the substrate portion.

9. The thermal conductivity sensor according to any one of the preceding claims, wherein the cap layer comprises a cap opening (9).

10. The thermal conductivity sensor according to any one of the preceding claims, wherein the dielectric membrane is a primary dielectric membrane, and wherein the thermal conductivity sensor further comprises:
a reference dielectric membrane (4a) provided with a reference heater (5a) wherein the reference dielectric membrane is located over a reference gap (51a);
wherein the primary dielectric membrane is exposed to the external atmosphere; and
wherein the reference dielectric membrane is disposed in a sealed chamber, and, optionally, wherein the primary dielectric membrane is disposed in a primary chamber, and wherein the reference dielectric membrane is disposed in a reference chamber;
wherein the thermal conductivity sensor comprises:
a primary cavity, the primary cavity being in fluid communication with the primary chamber; and
a reference cavity, the reference cavity being in fluid communication with the reference chamber.

11. The thermal conductivity sensor according to any one of the preceding claims, comprising a pressure sensor.

12. A method of manufacturing a thermal conductivity sensor for measuring a concentration of a gas, the method comprising:
forming a dielectric layer (24) on a substrate portion (1);
providing the dielectric layer with a heater (5);
forming a first gap (51) between the substrate portion and the dielectric layer, so as to form a dielectric membrane (4) in the dielectric layer, wherein the dielectric membrane is provided with the heater and the dielectric membrane is located above the first gap between the dielectric membrane and the substrate portion; and
forming a cap layer (8) and a second gap (52) above the membrane, such that a the second gap is located between the cap layer and the dielectric membrane;
wherein forming the cap layer comprises surface micro-machining the cap layer, comprising:
forming a second sacrificial layer (7) on the dielectric layer;
forming the cap layer on a second sacrificial layer; and
removing a portion of the second sacrificial layer to form the second gap.

13. The method according to claim 12, comprising:
(a) forming the dielectric layer on a first sacrificial layer (3), the first sacrificial layer being located between the dielectric layer and the substrate portion; and
removing a portion of the first sacrificial layer to form the first gap,
and/or
(b) removing a portion of the substrate portion to form the first gap.

14. The method according to claim 12 or 13, comprising forming the dielectric layer on a first sacrificial layer, the first sacrificial layer being located between the dielectric layer and the substrate portion; and
removing a portion of the first sacrificial layer to form the first gap, wherein the substrate portion and the first sacrificial layer are part of a substrate.

## Patentansprüche

1. Wärmeleitfähigkeitssensor zum Messen einer Konzentration eines Gases, wobei der Sensor Folgendes umfasst:
einen Substratabschnitt (1);
eine dielektrische Schicht, umfassend eine dielektrische Membran (4), wobei die dielektrische Membran mit einem Heizelement (5) versehen ist;
einen ersten Spalt (51) zwischen dem Substratabschnitt und der dielektrischen Membran, wobei sich die dielektrische Membran oberhalb des ersten Spalts befindet; und
eine oberflächenmikrobearbeitete Deckschicht (8);
eine zweite Opferschicht (7) zwischen der Deckschicht und der dielektrischen Schicht, wobei sich in der zweiten Opferschicht ein zweiter Spalt (52) befindet.

2. Wärmeleitfähigkeitssensor nach Anspruch 1, wobei eine Dicke der Deckschicht 5 µm oder weniger beträgt und/oder wobei die Deckschicht mindestens eines von einem dielektrischen Material, einem Metall, Silizium und Polysilizium umfasst.

3. Wärmeleitfähigkeitssensor nach Anspruch 1 oder 2, wobei ein Teil der Deckschicht in direktem Kontakt mit der dielektrischen Schicht steht.

4. Wärmeleitfähigkeitssensor nach einem der vorstehenden Ansprüche, weiter umfassend eine erste Opferschicht (3), wobei der Substratabschnitt und die erste Opferschicht Teil eines Chips sind und wobei der erste Spalt in der ersten Opferschicht des Chips geformt ist.

5. Wärmeleitfähigkeitssensor nach einem der vorstehenden Ansprüche, wobei der zweite Spalt eine Dicke vom 0,5-Fachen der Breite der dielektrischen Membran oder weniger aufweist.

6. Wärmeleitfähigkeitssensor nach einem der vorstehenden Ansprüche, wobei der zweite Spalt eine Dicke zwischen dem 0,25- und 4-Fachen einer Dicke der dielektrischen Membran aufweist.

7. Wärmeleitfähigkeitssensor nach einem der vorstehenden Ansprüche, wobei die Dicke des zweiten Spalts 20 µm oder weniger beträgt.

8. Wärmeleitfähigkeitssensor nach einem der vorstehenden Ansprüche, umfassend eine erste Opferschicht zwischen der dielektrischen Membran und dem Substratabschnitt, wobei sich der erste Spalt weiter in der ersten Opferschicht und, wahlweise, im Substratabschnitt befindet.

9. Wärmeleitfähigkeitssensor nach einem der vorstehenden Ansprüche, wobei die Deckschicht eine Deckenöffnung (9) aufweist.

10. Wärmeleitfähigkeitssensor nach einem der vorstehenden Ansprüche, wobei die dielektrische Membran eine primäre dielektrische Membran ist und wobei der Wärmeleitfähigkeitssensor weiter Folgendes umfasst:
eine dielektrische Referenzmembran (4a) mit einem Referenzheizelement (5a), wobei sich die dielektrische Referenzmembran über einem Referenzspalt (51a) befindet;
wobei die primäre dielektrische Membran der äußeren Atmosphäre ausgesetzt ist und
wobei die dielektrische Referenzmembran in einer abgedichteten Kammer angeordnet ist und, wahlweise, wobei die primäre dielektrische Membran in einer primären Kammer angeordnet ist und wobei die dielektrische Referenzmembran in einer Referenzkammer angeordnet ist;
wobei der Wärmeleitfähigkeitssensor Folgendes umfasst:
einen primären Hohlraum, wobei der primäre Hohlraum in strömungstechnischer Kommunikation mit der primären Kammer steht; und
einen Referenzhohlraum, wobei der Referenzhohlraum in strömungstechnischer Kommunikation mit der Referenzkammer steht.

11. Wärmeleitfähigkeitssensor nach einem der vorstehenden Ansprüche, umfassend einen Drucksensor.

12. Verfahren zum Herstellen eines Wärmeleitfähigkeitssensors zum Messen der Konzentration eines Gases, wobei das Verfahren Folgendes umfasst:
Bilden einer dielektrischen Schicht (24) auf einem Substratabschnitt (1);
Versehen der dielektrischen Schicht mit einem Heizelement (5);
Formen eines ersten Spalts (51) zwischen dem Substratabschnitt und der dielektrischen Schicht, um so eine dielektrische Membran (4) in der dielektrischen Schicht zu bilden, wobei die dielektrische Membran mit dem Heizelement versehen ist und sich die dielektrische Membran oberhalb des ersten Spalts zwischen der dielektrischen Membran und dem Substratabschnitt befindet; und
Bilden einer Deckschicht (8) und eines zweiten Spalts (52) oberhalb der Membran, sodass sich der zweite Spalt zwischen der Deckschicht und der dielektrischen Membran befindet;
wobei das Bilden der Deckschicht die Oberflächenmikrobearbeitung der Deckschicht umfasst, umfassend:
Bilden einer zweiten Opferschicht (7) auf der dielektrischen Schicht;
Bilden der Deckschicht auf einer zweiten Opferschicht und
Entfernen eines Abschnitts der zweiten Opferschicht, um den zweiten Spalt zu bilden.

13. Verfahren nach Anspruch 12, umfassend:
(a) Bilden der dielektrischen Schicht auf einer ersten Opferschicht (3), wobei sich die erste Opferschicht zwischen der dielektrischen Schicht und dem Substratabschnitt befindet; und
Entfernen eines Abschnitts der ersten Opferschicht, um den ersten Spalt zu bilden, und/oder
(b) Entfernen eines Abschnitts des Substrats, um den ersten Spalt zu bilden.

14. Verfahren nach Anspruch 12 oder 13, umfassend Bilden der dielektrischen Schicht auf einer ersten Opferschicht, wobei sich die erste Opferschicht zwischen der dielektrischen Schicht und dem Substratabschnitt befindet; und
Entfernen eines Abschnitts der ersten Opferschicht, um den ersten Spalt zu bilden, wobei der Substratabschnitt und die erste Opferschicht Teil eines Substrats sind.

## Revendications

1. Capteur de conductivité thermique pour mesurer une concentration d'un gaz, le capteur comprenant :
une portion de substrat (1) ;
une couche diélectrique comprenant une membrane diélectrique (4), dans laquelle la membrane diélectrique est pourvue d'un réchauffeur (5) ;
un premier espace (51) entre la portion de substrat et la membrane diélectrique, dans lequel la membrane diélectrique est située au-dessus du premier espace ; et
une couche superficielle micro-usinée de surface (8) ;
une seconde couche sacrificielle (7) entre la couche superficielle et la couche diélectrique, dans lequel un second espace (52) est situé dans la seconde couche sacrificielle.

2. Capteur de conductivité thermique selon la revendication 1, dans lequel une épaisseur de la couche superficielle est de 5 µm ou moins et/ou dans lequel la couche superficielle comprend au moins un parmi un matériau diélectrique, un métal, du silicium ou du polysilicium.

3. Capteur de conductivité thermique selon la revendication 1 ou la revendication 2, dans lequel une partie de la couche superficielle est en contact direct avec la couche diélectrique.

4. Capteur de conductivité thermique selon l'une quelconque des revendications précédentes, comprenant en outre une première couche sacrificielle (3), dans laquelle la portion de substrat et la première couche sacrificielle font partie d'une puce, et dans lequel le premier espace est formé dans la première couche sacrificielle de la puce.

5. Capteur de conductivité thermique selon l'une quelconque des revendications précédentes, dans lequel le second espace présente une épaisseur de 0,5 fois ou moins la largeur de la membrane diélectrique.

6. Capteur de conductivité thermique selon l'une quelconque des revendications précédentes, dans lequel le second espace présente une épaisseur entre 0,25 et 4 fois une épaisseur de la membrane diélectrique.

7. Capteur de conductivité thermique selon l'une quelconque des revendications précédentes, dans lequel une épaisseur du second espace est de 20 µm ou moins.

8. Capteur de conductivité thermique selon l'une quelconque des revendications précédentes, comprenant une première couche sacrificielle entre la membrane diélectrique et la portion de substrat, dans lequel le premier espace est en outre situé dans la première couche sacrificielle et, facultativement, dans la portion de substrat.

9. Capteur de conductivité thermique selon l'une quelconque des revendications précédentes, dans lequel la couche superficielle comprend une ouverture superficielle (9).

10. Capteur de conductivité thermique selon l'une quelconque des revendications précédentes, dans lequel la membrane diélectrique est une membrane diélectrique primaire, et dans lequel le capteur de conductivité thermique comprend en outre :
une membrane diélectrique de référence (4a) pourvue d'un réchauffeur de référence (5a) dans lequel la membrane diélectrique de référence est située par-dessus un espace de référence (51a) ;
dans lequel la membrane diélectrique primaire est exposée à l'atmosphère externe ; et
dans lequel la membrane diélectrique de référence est disposée dans une chambre scellée, et, facultativement, dans lequel la membrane diélectrique primaire est disposée dans une chambre primaire, et dans lequel la membrane diélectrique de référence est disposée dans une chambre de référence ;
dans lequel le capteur de conductivité thermique comprend :
une cavité primaire, la cavité primaire étant en communication fluidique avec la chambre primaire ; et
une cavité de référence, la cavité de référence étant en communication fluidique avec la chambre de référence.

11. Capteur de conductivité thermique selon l'une quelconque des revendications précédentes, comprenant un capteur de pression.

12. Procédé de fabrication d'un capteur de conductivité thermique pour mesurer une concentration d'un gaz, le procédé comprenant :
la formation d'une couche diélectrique (24) sur une portion de substrat (1) ;
la fourniture à la couche diélectrique d'un réchauffeur (5) ;
la formation d'un premier espace (51) entre la portion de substrat et la couche diélectrique, de manière à former une membrane diélectrique (4) dans la couche diélectrique, dans lequel la membrane diélectrique est pourvue du réchauffeur et la membrane diélectrique est située au-dessus du premier espace entre la membrane diélectrique et la portion de substrat ; et
formant une couche superficielle (8) et un second espace (52) au-dessus de la membrane, de sorte que le second espace est situé entre la couche superficielle et la membrane diélectrique ;
dans lequel la formation de la couche superficielle comprend un micro-usinage de surface de la couche superficielle, comprenant :
la formation d'une seconde couche sacrificielle (7) sur la couche diélectrique ;
la formation de la couche superficielle sur une seconde couche sacrificielle ; et
le retrait d'une portion de la seconde couche sacrificielle pour former le second espace.

13. Procédé selon la revendication 12, comprenant :
(a) la formation de la couche diélectrique sur une première couche sacrificielle (3), la première couche sacrificielle étant située entre la couche diélectrique et la portion de substrat ; et
le retrait d'une portion de la première couche sacrificielle pour former le premier espace, et/ou
(b) le retrait d'une portion de la portion de substrat pour former le premier espace.

14. Procédé selon la revendication 12 ou 13, comprenant la formation de la couche diélectrique sur une première couche sacrificielle, la première couche sacrificielle étant située entre la couche diélectrique et la portion de substrat ; et
le retrait d'une portion de la première couche sacrificielle pour former le premier espace, dans lequel la portion de substrat et la première couche sacrificielle font partie d'un substrat.
